# EUROPEAN PATENT APPLICATION

(11) **EP 4 280 447 A1**
(43) Date of publication of application: **22.11.2023**
(21) Application number: 22174078.0
(22) Date of filing: 18.05.2022
(51) Int. Cl.: H02M 7/5387, H02M 7/5395, H02M 1/42, H02M 3/158, H02P 27/08, B66B 1/30

(54) **A REGENERATIVE FREQUENCY CONVERTER AND AN ELEVATOR SYSTEM**

(71) Applicant: KONE Corporation, 00330 Helsinki (FI)
(72) Inventor: Eskandari, Bahman, 05800 Hyvinkää (FI)

(57) **Abstract**

The present invention discloses a regenerative frequency converter (1) and an elevator system comprising such a frequency converter. The frequency converter (1) is operable for bidirectional supply of power between an alternating current supply network (2) and an alternating current electric motor (3). The frequency converter comprises a regenerative line bridge (6) and an inverter (7) interconnected by a DC link (8). The inverter (7) comprises phase legs (9A, 9B, 9C) for supplying a variable-amplitude, variablefrequency voltage to the motor phases. The regenerative line bridge (6) comprises buckboost converters (13A,14A,15A,16A,18A; 13B,14B,15B,16A,18A; 13C,14C,15C,16C,18C) connected between different input terminals (4A,4B,4C) and the DC link (8).

## Description

### Field of the invention

The invention is related to regenerative frequency converters, in particular frequency converters useful for driving an elevator hoisting motor.

### Background

Alternating current electric machines, such as elevator hoisting motors, may be operated by means of a frequency converter. Frequency converter may be connected between an alternating current supply network of a building and the electric machine. The supply network may be further connected to a power grid. Frequency converter may include an inverter, which provides variable-voltage and variable-frequency supply voltage to the windings of the alternating current electric machine. Frequency converter may also include a regenerative line bridge which supplies electric power to / from the supply network. Inverter and regenerative line bridge may be interconnected by a DC link.

The regenerative line bridge usually needs a separate LCL filter connected between the supply network and input terminals of the regenerative line bridge. It is often heavy and bulky, to meet the EMI and THD standards criteria required for frequency converters.

With respect to the current technology related to regenerative frequency converters, working with DC link voltages lower than 600 V may not be possible with a 380 V supply network. Usually DC link voltage of at least 620 V is adopted to have better control margin for the regenerative line bridge, while for the inverter side only 450 V would be adequate.

Such a high DC link voltage may increase voltage stress of the IGBT transistors of the line bridge and the inverter; it may also cause greater common mode voltage in the motor windings. In general speaking, life time of main components of the motor drive may be adversely affected by the high DC link voltage.

### Summary

The object of the invention is to solve one or more of the above-identified problems. This object is achieved with a frequency converter according to claim 1 and an elevator system according to claim 16. The preferred embodiments of the invention are described in the dependent claims.

First aspect of the invention is a frequency converter operable for bidirectional supply of power between an alternating current supply network and an alternating current electric motor. The frequency converter comprises input terminals of the alternating current supply network and output terminals of the alternating current electric motor as well as a regenerative line bridge and an inverter interconnected by a DC link. The inverter comprises phase legs for supplying a variable-amplitude, variable-frequency voltage to the motor phases via the output terminals.

The regenerative line bridge comprises phase-specific bidirectional buck-boost converters connected between the input terminals and the DC link. Each of the buck-boost converters is configured to be connected to a different phase of the supply network to enable bidirectional supply of power between the supply network and the DC link.

Term "buck-boost converter" refers to a power converter capable of generating an output voltage magnitude either greater than or less than the input voltage magnitude.

Term "phase-specific" buck-boost converter means that specific buck-boost converter is configured to supply power to / from only one of the supply network phases.

Term "bidirectional" buck-boost converter refers to a buck-boost converter capable of feeding power in two opposite directions.

This can mean that DC bus voltage may be controlled from 300 V to 700 V, preferably around 450V, in a 380V supply network through the buck-boost converters. By reducing the DC link voltage this way, the reliability of the system will be increased. Common mode voltage present at the motor phases may be reduced as well.

Further, there is no need for additional EMI filters in the supply network side due to the use of the buck-boost converters.

Second aspect of the invention is an elevator system, comprising an elevator car movable in an elevator shaft through landings, as well as a hoisting motor for moving the elevator car. The elevator system comprises the frequency converter according to the first aspect of the invention.

By means of the invention, high quality sinusoidal current wave forms may be achieved both in the line side and the motor side terminals of elevator hoisting motor. This means that high ride quality may be achieved e.g. in elevator systems using the inventive frequency converter.

Further, up to 35 percent reduction may be achieved in weight and size compared to traditional frequency converters. This is also important for elevator systems and in particular for machine room less elevator systems, wherein the frequency converter may be located in a limited space in elevator shaft or elevator landing.

The preceding summary, as well as the additional features and additional advantages of the invention presented below, will be better understood by the aid of the following description of preferred embodiments, said description not limiting the scope of application of the invention.

### Brief explanation of the figures

- Figure 1: presents a schematic diagram of a frequency converter according to a first embodiment of the invention.
- Figure 2: presents a schematic diagram of a frequency converter according to a second embodiment of the invention.
- Figure 3: depicts an elevator system having an elevator drive, which comprises a frequency converter according to the first or the second embodiment.

### More detailed description of preferred embodiments of the invention

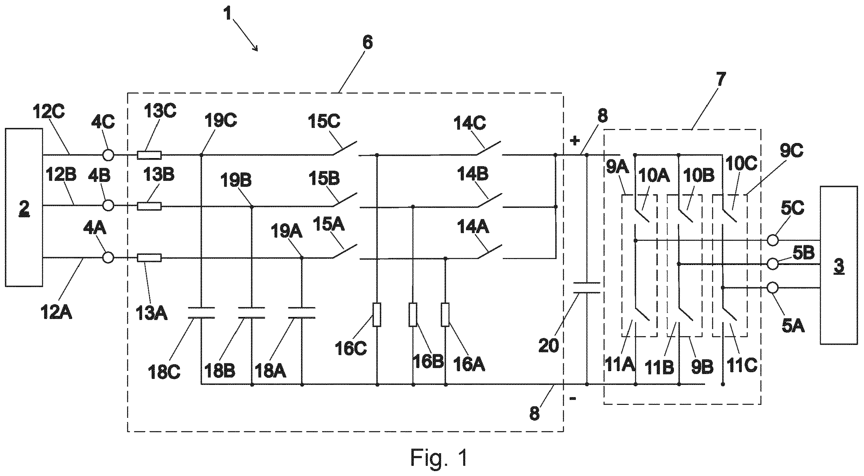

For the sake of intelligibility, in figs 1 - 3 only those features are represented which are deemed necessary for understanding the invention. Therefore, for instance, certain components / functions which are widely known to be present in corresponding art may not be represented.

In the description same references are always used for same items.

The present disclosure brings forward a new kind of frequency converter topology, in particular for a regenerative line bridge of the frequency converter. With such topology it is possible to adjust DC link voltage approximately between 300 - 700 volts in a 380 V supply network. This is especially useful in implementations using modern highspeed power transistors, such as gallium nitride transistors, silicon carbide transistors, IGBT transistors of MOSFET transistors.

Two different line bridge topologies will be covered in the following embodiments: an inverting topology (embodiment 1) and a non-inverting topology (embodiment 2). Especially the inverting topology of embodiment 1 has a low transistor count despite wide DC link voltage adjustment range. Non-inverting topology of embodiment 2 has a low common-mode voltage disturbance level, which may be beneficial e.g. for elevator applications.

Through the invention, one or more of the following improvements may be achieved:
- Reducing the DC link voltage.
- Eliminating the bulky LCL filter from the supply network terminals.
- Reducing the common-mode voltage at motor windings.
- Increasing the power density of the drive system such that physical size of the drive system may be reduced.
- Increasing the reliability of switching actions of power electronics components through reducing the voltage stress.
- Increasing the energy efficiency.

In the following, features common to the first and the second embodiments will be explained first, and differentiating features will be disclosed afterwards.

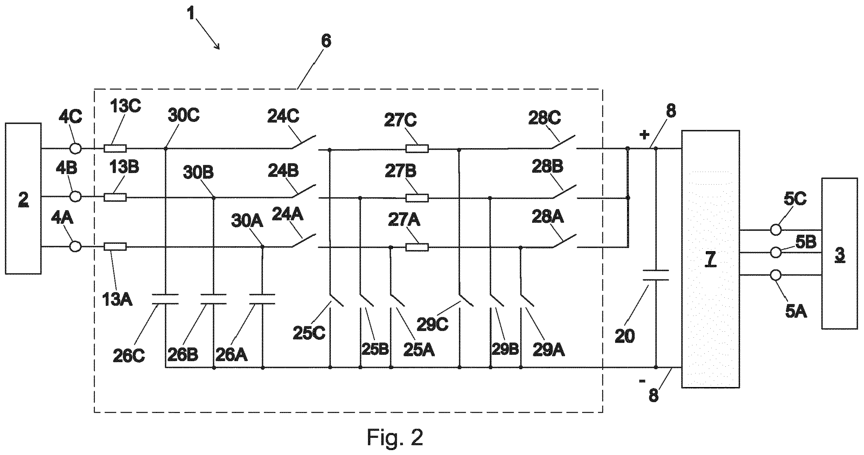

Frequency converter 1, as shown in Figs. 1 and 2, is operable for bidirectional supply of power between an alternating current supply network 2 and an alternating current electric motor 3, i.e. it can supply electrical power from the supply network 2 to the electric motor 3, as well as regenerated electrical energy from the motor 3 back to the network 2. The supply network 2 is preferably a 3-phase supply network, and the electric motor 3 is preferably a 3-phase electric motor.

Frequency converter 1 comprises input terminals 4A, 4B, 4C, of the alternating current supply network 2, which terminals may be e.g. connectors for connecting to the cables 12A, 12B, 12C of the supply network 2. Frequency converter 1 comprises output terminals 5A, 5B, 5C of the alternating current electric motor 3, which terminals may be e.g. connectors for connecting to the motor winding cables.

Frequency converter has a regenerative line bridge 6 and an inverter 7 interconnected by a DC link 8.

The inverter has power switches, such as IGBT transistors, MOSFET transistors, Silicon Carbine transistors or Gallium Nitride transistors, arranged to an inverter configuration, as known in the art. Thus, the inverter may have e.g. a 2-level or a 3-level, 3-phase inverter configuration, comprising phase legs 9A, 9B, 9C for supplying a variable-amplitude, variable-frequency voltage to the motor phases, i.e. to the windings of the motor.

Each phase leg 9A, 9B, 9C may comprise a high-side 10A, 10B, 10C and a low-side 11A, 11B, 11C switch connected to the high-side (+) and low-side (-) DC link busbars, respectively. Connection point between the high-side 10A, 10B, 10C and low-side 11A, 11B, 11C switches may be connected to one of the output terminals 5A, 5B, 5C, such that different phase legs are connected to different output terminals 5A, 5B, 5C.

The regenerative line bridge 6 comprises phase-specific bidirectional buck-boost converters 13A,14A,15A,16A,18A; 13B,14B,15B,16A,18A; 13C,14C,15C,16C,18C connected between the input terminals 4A,4B,4C and the DC link 8. Each of the phase-specific buck-boost converters 13A,14A,15A,16A,18A; 13B,14B,15B,16A,18A; 13C,14C,15C,16C,18C is configured to be connected to a different phase of the supply network 2 to enable bidirectional supply of power between the supply network 2 and the DC link 8. This means that each input terminal is connected to one of the buck-boost converters, and all the buck-boost converters are further connected to the common DC link 8, to enable bidirectional supply of power between the supply network 2 and the DC link 8.

The buck-boost converters 13A,14A,15A,16A,18A; 13B,14B,15B,16B,18B; 13C,14C,15C,16C,18C may be configured to synchronize line current to the AC line voltage, while at the same time regulating the DC link voltage 8 by adjusting power supply of the buck-boost converters 13A,14A,15A,16A,18A; 13B,14B,15B,16B,18B; 13C,14C,15C,16C,18C between the supply network 2 and the DC link 8. To adjust the power supply, frequency converter 1 may comprise e.g. a control unit, which generates control pulses to the power switches of the buck-boost converters. The buck-boost converters 13A,14A,15A,16A,18A; 13B,14B,15B,16B,18B; 13C,14C,15C,16C,18C may be configured for adjusting DC link voltage approximately between 300 to 700 V in a 380 V supply network.

According to the first embodiment then, bidirectional buck-boost converters 13A,14A,15A,16A,18A; 13B,14B,15B,16B,18B; 13C,14C,15C,16C,18C have an inverting configuration, meaning that output voltage of the buck-boost converter has an opposite polarity to the input voltage. As depicted in Figure 1, all three buck-boost converters have the same configuration, each converter comprising a line inductor 13A, 13B, 13C, a first 14A, 14B, 14C and a second 15A, 15B, 15C switch, a second inductor 16A, 16B, 16C, as well as a capacitor 18A, 18B, 18C.

The line inductor 13A, 13B, 13C is connected to the input terminal 4A, 4B, 4C, such that each input terminal is connected to different line inductor 13A, 13B, 13C.

The first 14A, 14B, 14C and the second 15A, 15B, 15C switch are connected in series with each other between a first DC link busbar 8 and the line inductor 13A, 13B, 13C, such that the first switch 14A, 14B, 14C is connected to the first DC link busbar 8 and the second switch 15A, 15B, 15C is connected to the line inductor 13A, 13B, 13C.

Finally, the second inductor 16A, 16B, 16C is connected between the second DC link busbar 8 and the connection point 17A, 17B, 17C between the first 14A, 14B, 14C and the second 15A, 15B, 15C switches, and the capacitor 18A, 18B, 18C is connected between the second DC link busbar 8 and the connection point 19A, 19B, 19C between the line inductor 13A, 13B, 13C and the second switch 15A, 15B, 15C.

According to the second embodiment, the bidirectional buck-boost converters have a non-inverting configuration, such that output voltage of the buck-boost converter has the same polarity as the input voltage. As depicted in Figure 2, all three buck-boost converters have again the same configuration, comprising in this case a line inductor 13A, 13B, 13C, a third inductor 27A, 27B, 27C, a third 24A, 24B, 24C and a fourth 25A, 25B, 25C switch, a fifth 28A, 28B, 28C and a sixth 29A, 29B, 29C switch, and a capacitor 26A, 26B, 26C.

Each line inductor 13A, 13B, 13C is connected to a different input terminal 4A, 4B, 4C.

The third 24A, 24B, 24C and the fourth 25A, 25B, 25C switch are connected in series with each other between the line inductor 13A, 13B, 13C and the second DC link busbar (8), such that the third switch 24A, 24B, 24C is connected between the line inductor 13A, 13B, 13C and the third inductor 27A, 27B, 27C and the fourth switch is connected between the third inductor 27A, 27B, 27C and the second DC link busbar 8.

Further, the fifth 28A, 28B, 28C and the sixth 29A, 29B, 29C switch are connected in series with each other between the first and the second DC link busbars 8, such that the fifth switch 28A, 28B, 28C is connected between the third inductor 27A, 27B, 27C and the first DC link busbar 8 and the sixth switch 29A, 29B, 29C is connected between the third inductor 27A, 27B, 27C and the second DC link busbar 8.

The capacitor 26A, 26B, 26C is connected between the second DC link busbar 8 and the connection point 30A, 30B, 30C between the line inductor 13A, 13B, 13C and the third switch 24A, 24B, 24C.

In accordance with the first and the second embodiments, a DC link capacitor 20 is connected between the first (+) and the second (-) DC link busbars. The first DC link busbar is preferably the high-side DC link busbar (+) and the second DC link busbar the low-side DC link busbar (-).

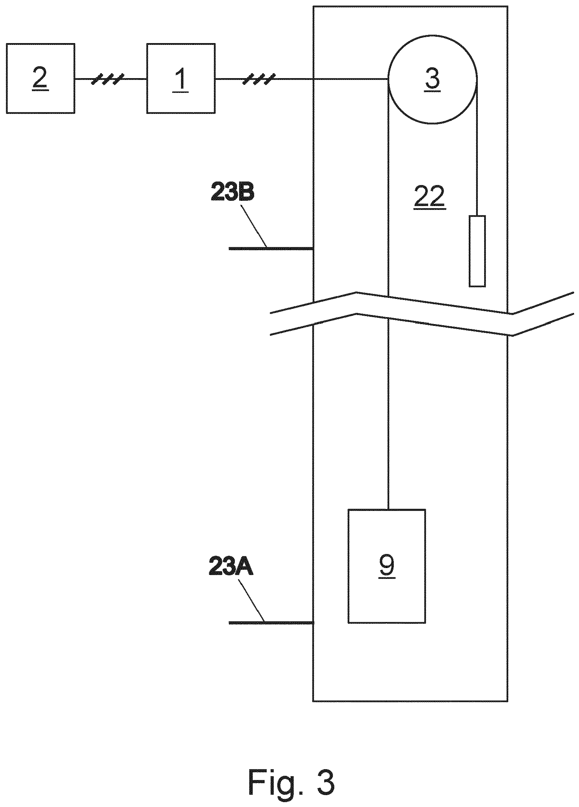

Figure 3 shows an elevator system, which comprises an elevator car 21 movable in an elevator shaft 22 through the landings 23A, 23B. When stopped at the landing 23A, 23B, elevator passengers may enter and exit the elevator car 21. The elevator system comprises also a hoisting motor 3, preferably a synchronous permanent magnet motor, for moving the elevator car 21. Power supply to the hoisting motor 3 is controlled by a frequency converter 1. Said frequency converter 1 has a configuration according to the first or the second embodiment. Speed of the elevator car 21 is adjusted by means of the frequency converter, such that run with the elevator from a departure to an arrival landing will be smooth and comfortable for the elevator passengers.

While described in connection with a number of exemplary embodiments, and implementations, the present invention is not limited to those only, but may cover further embodiments, and implementations, within the limits as defined in the independent claim(s).

## Claims

1. A frequency converter (1) operable for bidirectional supply of power between an alternating current supply network (2) and an alternating current electric motor (3), the frequency converter comprising:
input terminals (4A, 4B, 4C) of the alternating current supply network (2) and output terminals (5A, 5B, 5C) of the alternating current electric motor (3);
a regenerative line bridge (6) and an inverter (7) interconnected by a DC link (8);
wherein the inverter (7) comprises phase legs (9A, 9B, 9C) for supplying a variable-amplitude, variable-frequency voltage to the motor phases through the output terminals (5A, 5B, 5C),
**characterized by**:
the regenerative line bridge (6) comprises phase-specific bidirectional buck-boost converters (13A,14A,15A,16A,18A; 13B,14B,15B,16A,18A; 13C,14C,15C,16C,18C) connected between the input terminals (4A,4B,4C) and the DC link (8), wherein each of the buck-boost converters (13A,14A,15A,16A,18A; 13B,14B,15B,16A,18A; 13C,14C,15C,16C,18C) is configured to be connected to a different phase of the supply network (2) to enable bidirectional supply of power between the supply network (2) and the DC link (8).

2. The frequency converter according to claim 1, wherein the buck-boost converters (13A,14A,15A,16A,18A; 13B,14B,15B,16A,18A; 13C,14C,15C,16C,18C) are configured for bidirectional supply of power between the supply network (2) and the DC link (8).

3. The frequency converter according to claim 1 or 2, wherein the buck-boost converters (13A,14A,15A,16A,18A; 13B,14B,15B,16B,18B; 13C,14C,15C,16C,18C) are configured to synchronize line current to the AC line voltage.

4. The frequency converter according to any of the preceding claims, wherein the line bridge (6) is configured to regulate the DC link voltage (8) by adjusting power supply of the buck-boost converters (13A,14A,15A,16A,18A; 13B,14B,15B,16B,18B; 13C,14C,15C,16C,18C) between the supply network (2) and the DC link 8.

5. The frequency converter according to any of the preceding claims, wherein the buck-boost converters (13A,14A,15A,16A,18A; 13B,14B,15B,16B,18B; 13C,14C,15C,16C,18C) are configured for adjusting DC link voltage approximately between 300 to 700 V in a 380 V supply network.

6. The frequency converter according to any of the preceding claims, wherein the buck-boost converter (13A,14A,15A,16A,18A; 13B,14B,15B,16B,18B; 13C,14C,15C,16C,18C) has an inverting configuration.

7. The frequency converter according to claim 6, wherein each buck-boost converter comprises:
a line inductor (13A, 13B, 13C) connected to the input terminal (4A, 4B, 4C);
a first (14A, 14B, 14C) and a second (15A, 15B, 15C) switch connected in series with each other between a first DC link busbar (8) and the line inductor (13A, 13B, 13C),
wherein the first switch (14A, 14B, 14C) is connected to the first DC link busbar (8) and the second switch (15A, 15B, 15C) is connected to the line inductor (13A, 13B, 13C);
a second inductor (16A, 16B, 16C) connected between the second DC link busbar (8) and the connection point (17A, 17B, 17C) between the first (14A, 14B, 14C) and the second (15A, 15B, 15C) switches; and
a capacitor (18A, 18B, 18C) connected between the second DC link busbar (8) and the connection point (19A, 19B, 19C) between the line inductor (13A, 13B, 13C) and the second switch (15A, 15B, 15C).

8. The frequency converter according to any of claims 1 - 5, wherein the buck-boost converter has a non-inverting configuration.

9. The frequency converter according to claim 8, wherein each buck-boost converter comprises:
a line inductor (13A, 13B, 13C) connected to the input terminal (4A, 4B, 4C);
a third inductor (27A, 27B, 27C);
a third (24A, 24B, 24C) and a fourth (25A, 25B, 25C) switch connected in series with each other between the line inductor (13A, 13B, 13C) and the second DC link busbar (8),
wherein the third switch (24A, 24B, 24C) is connected between the line inductor (13A, 13B, 13C) and the third inductor (27A, 27B, 27C) and the fourth switch is connected between the third inductor (27A, 27B, 27C) and the second DC link busbar (8);
a fifth (28A, 28B, 28C) and a sixth (29A, 29B, 29C) switch connected in series with each other between the first and the second DC link busbars (8),
wherein the fifth switch (28A, 28B, 28C) is connected between the third inductor (27A, 27B, 27C) and the first DC link busbar (8) and the sixth switch is connected between the third inductor (27A, 27B, 27C) and the second DC link busbar (8);
a capacitor (26A, 26B, 26C) connected between the second DC link busbar (8) and the connection point (30A, 30B, 30C) between the line inductor (13A, 13B, 13C) and the third switch (24A, 24B, 24C).

10. The frequency converter according to claim 7 or 9, further comprising a DC link capacitor (20) connected between the first (+) and the second (-) DC link busbars.

11. The frequency converter according to claim 7, 9 or 10, wherein the first DC link busbar is the high-side DC link busbar (+) and the second DC link busbar is the low-side DC link busbar (-).

12. The frequency converter according to any of the preceding claims, wherein the supply network (2) is a 3-phase supply network.

13. The frequency converter according to any of the preceding claims, wherein the electric motor (3) is a 3-phase electric motor.

14. The frequency converter according to any of the preceding claims, wherein the electric motor (3) is a synchronous permanent magnet motor.

15. The frequency converter according to any of the preceding claims, wherein each phase leg (9A, 9B, 9C) comprises a high-side (10A, 10B, 10C) and a low-side (11A, 11B, 11C) switch connected to the high-side (+) and low-side (-) DC link busbars, respectively, as well as to one of the output terminals (5A, 5B, 5C).

16. An elevator system, comprising an elevator car (21) movable in an elevator shaft (22) through landings (23A, 23B), as well as a hoisting motor (3) for moving the elevator car (21),
wherein the elevator system comprises the frequency converter (1) according to any of claims 1 - 15.

17. The elevator system according to claim 16, wherein the hoisting motor (3) is a synchronous permanent magnet motor.
